## Europäisches Patentamt

## European Patent Office

## Office européen des brevets

(11) Veröffentlichungsnummer: **0 113 436**
**B1**

(12) **EUROPÄISCHE PATENTSCHRIFT**

(45) Veröffentlichungstag der Patentschrift:
**01.03.89**

(21) Anmeldenummer: **83112173.6**

(22) Anmeldetag: **03.12.83**

(51) Int. Cl.⁴: **H 04 N 7/093**, H 04 N 7/04

(54) **Fernsehübertragungssystem mit integrierter Übertragung von Zusatzinformationen, insbesondere Tonsignalen.**

(30) Priorität: **14.12.82 DE 3246145**

(43) Veröffentlichungstag der Anmeldung:
**18.07.84 Patentblatt 84/29**

(45) Bekanntmachung des Hinweises auf die Patenterteilung:
**01.03.89 Patentblatt 89/9**

(84) Benannte Vertragsstaaten:
**DE FR GB NL**

(56) Entgegenhaltungen:
**CH-A- 595 025**
**DE-A- 2 141 815**
**DE-A- 3 040 958**
**DE-B- 2 648 977**

(73) Patentinhaber: **ALCATEL N.V.,**
**Strawinskylaan 537 (World Trade Center), NL-1077 XX**
**Amsterdam (NL)**

(84) Benannte Vertragsstaaten: **FR GB NL**

(73) Patentinhaber: **Standard Elektrik Lorenz**
**Aktiengesellschaft, Hellmuth-Hirth-Strasse 42,**
**D-7000 Stuttgart 40 (DE)**

(84) Benannte Vertragsstaaten: **DE**

(72) Erfinder: **Zschunke, Willmut, Prof.Dr.,**
**Langgässerweg 29, D-6100 Darmstadt (DE)**

(74) Vertreter: **Graf, Georg Hugo, Dipl.-Ing. et al, Standard**
**Elektrik Lorenz AG Patent- und Lizenzwesen**
**Postfach 30 09 29, D-7000 Stuttgart 30 (DE)**

**Beschreibung**

Die Erfindung betrifft ein Fernsehübertragungssystem nach dem Oberbegriff der Patentansprüche 1 und 4. Ein derartiges System ist bekannt aus dem Report 632-2, GT V4 124 (Revised version), Part 4 (Seite 35 bis 46 und Figur 19 bis 21) der European Broadcasting Union vom September 1982. Dieses System wird dort als System vom «Typ C» bezeichnet, oder siehe auch DE-A-2 141 815.

Es ist die Aufgabe der Erfindung, für dieses System einen möglichst einfachen Sender und Empfänger anzugeben.

Die Aufgabe wird wie in den Patentansprüchen 1 und 4 angegeben gelöst. Weiterbildungen dieser Lösungen sind den abhängigen Ansprüchen entnehmbar.

Die Erfindung wird nun anhand der Zeichnungen beispielsweise näher erläutert.

Es zeigen:

Figur 1 ein erstes Ausführungsbeispiel, bei dem der Frequenzmodulator auch als Phasenumtast-Modulator verwendet ist,

Figur 2a–2c Signalformen zur Erläuterung der Phasenumtastmodulation der Anordnung nach Figur 1,

Figur 3a–3c ein zweites Ausführungsbeispiel, bei dem der Frequenzmodulator auch als Phasenumtast-Modulator verwendet ist, mit einer Phasenauswahlschaltung und deren Wahrheitstabelle,

Figur 4 eine erste empfangsseitige Anordnung zur Frequenzdemodulation und Phasenumtast-Demodulation bei einer 2-Phasen-Umtastung,

Figur 5 eine zweite empfangsseitige Anordnung zur Frequenzdemodulation und Phasenumtast-Demodulation bei einer 2-Phasen-Umtastung, deren Störabstand verbessert ist,

Figur 6 eine empfangsseitige Anordnung zur Frequenzdemodulation und Phasenumtast-Demodulation bei einer 4-Phasen-Umtastung und

Figur 7a–7g ein Beispiel eines Phasenverlaufs und der zugehörigen Signalformen zur Erläuterung der bei der Anordnung nach Fig. 6 stattfindenden 4-Phasen-Demodulation.

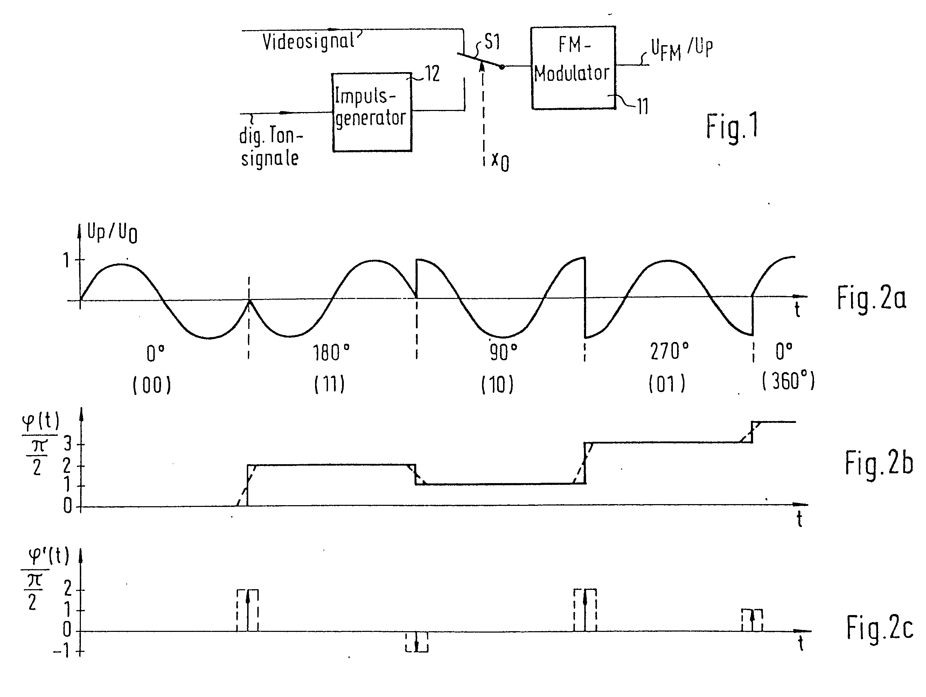

Beim Ausführungsbeispiel nach Figur 1 wird ein zur Übertragung des Videosignals, auch FBAS-Signal (Farbbildaustastsynchronsignal) genannt, vorgesehener Frequenzmodulator 11 durch eine geeignete Ansteuerung auch als Phasenumtast-Modulator verwendet.

Es ist aus der DE-OS-2 644 973 bekannt, daß man einen Frequenzmodulator zur Erzeugung eines phasenumgetasteten Signals verwenden kann, wenn man den Frequenzmodulator mit einem Steuersignal ansteuert, das gleich der zeitlichen Ableitung des gewünschten Phasenverlaufs ist. Eine Doppelverwendung eines Frequenzmodulators zur Frequenzmodulation und zur Phasenumtastmodulation in einer einzigen Sendeeinrichtung ist dort nicht vorgesehen.

Der Frequenzmodulator 11 der in Figur 1 gezeigten erfindungsgemäßen Modulatoranordnung empfängt sein Eingangssignal über einen Schalter S1, der in einer ersten (gezeigten) Schalterstellung das Videosignal und in einer zweiten (nicht gezeigten) Schalterstellung ein Steuersignal dem Eingang des Frequenzmodulators 11 zuführt, das von den zu übertragenden Zusatzinformationen, die beispielsweise digitale Tonsignale sind, abgeleitet wird. Diese Ableitung besorgt wie nachstehend beschrieben ein Impulsgenerator 12. Der Schalter S1 wird durch einen Horizontalaustastlücken-Impuls $X_0$ derart gesteuert, daß er während der Horizontalaustastlücken den Impulsgenerator 12 mit dem Frequenzmodulator 11 verbindet und ansonsten diesem das durch Frequenzmodulation zu übertragende Videosignal zuführt. Im Frequenzmodulator 11 wird also im zeitlichen Wechsel der Bildträger durch das Videosignal frequenzmoduliert oder durch die digitalen Tonsignale phasenumgetastet. Seine beiden zeitlich abwechselnden Ausgangssignale sind dem entsprechend mit $U_{FM}$ bzw. $U_P$ bezeichnet. Als zu modulierender Bildträger wird vorzugsweise nicht die für die Übertragungsstrecke notwendige Hochfrequenzschwingung, sondern eine Zwischenfrequenz-Schwingung mit beispielsweise 70 MHz verwendet, so daß der modulierte Bildträger für die Übertragung in einer oder mehreren Stufen in die Übertragungsfrequenzlage umgesetzt wird.

Anhand der Figur 2a bis 2c wird nun erläutert, mit welchen Signalen der Frequenzmodulator bei einer beispielhaften Folge von zu übertragenden digitalen Tonsignalen angesteuert werden muß, um den zeitlichen Phasenverlauf zu erzeugen, der entsprechend den zu übertragenden digitalen Signalen durch die Codierungsregeln bestimmt ist. Figur 2a zeigt die durch die Codierungsregeln bestimmte Phasenumtastung einer Schwingung $U_P$, die bei einer Folge von zu übertragenden Dibits, d. h. von paarweise zusammengefaßten Bits, durch die Codierungsregeln der Phasenumtastung bestimmt ist. Man erkennt, daß bei einem Dibit 00 der Phasensprung 0°, bei einem Dibit 11 der Phasensprung 180°, bei einem Dibit 10 der Phasensprung 90° und bei einem Dibit 01 der Phasensprung 270° beträgt. Die Amplitude dieser phasenumgetasteten Schwingung ist in Figur 2a mit $U_0$ bezeichnet. Den dazugehörigen zeitlichen Phasenverlauf $\varphi(t)$ dieser phasenumgetasteten Schwingung zeigt Figur 2b als Vielfache von $\frac{\pi}{2}$.

Entsprechend der Figur 2a wechselt die Phase bei den Phasenumtastpunkten zeitlich nacheinander von 0 auf 180°, auf 90°, auf 270° und wieder auf 360° (= 0°). Den Verlauf der zeitlichen Ableitung $\varphi(t)$ dieses zeitlichen Phasenverlaufs $\varphi(t)$ zeigt ebenfalls als Vielfache von $\frac{\pi}{2}$ die Fig. 2c. Wenn die Phasenlagen nach Fig. 2b nicht, wie idealisiert dargestellt, sprunghaft wechseln, sondern wegen der endlichen Modulatorsteilheit oder wegen einer erwünschten Begrenzung der Bandbreite des phasenmodulierten Signals die gestrichelt gezeichneten nicht senkrechten Übergänge aufweisen, ergeben sich als zeitliche Ableitung $\varphi'(t)$ des

Phasenverlaufs die in Fig. 2c gestrichelt gezeigten Impulse, deren Breite durch die Phasenübergangszeit bestimmt und deren Fläche bzw. Amplitude den Phasensprüngen proportional ist. Durch Ansteuerung des Frequenzmodulators 11 mit einem solchen vierwertigen Impulssignal in Abhängigkeit von den zur Übertragung jeweils anstehenden Dibits läßt sich also die in Fig. 2a gezeigte Schwingung $U_P$ erzeugen, die eine 4-Phasen-Umtastung aufweist.

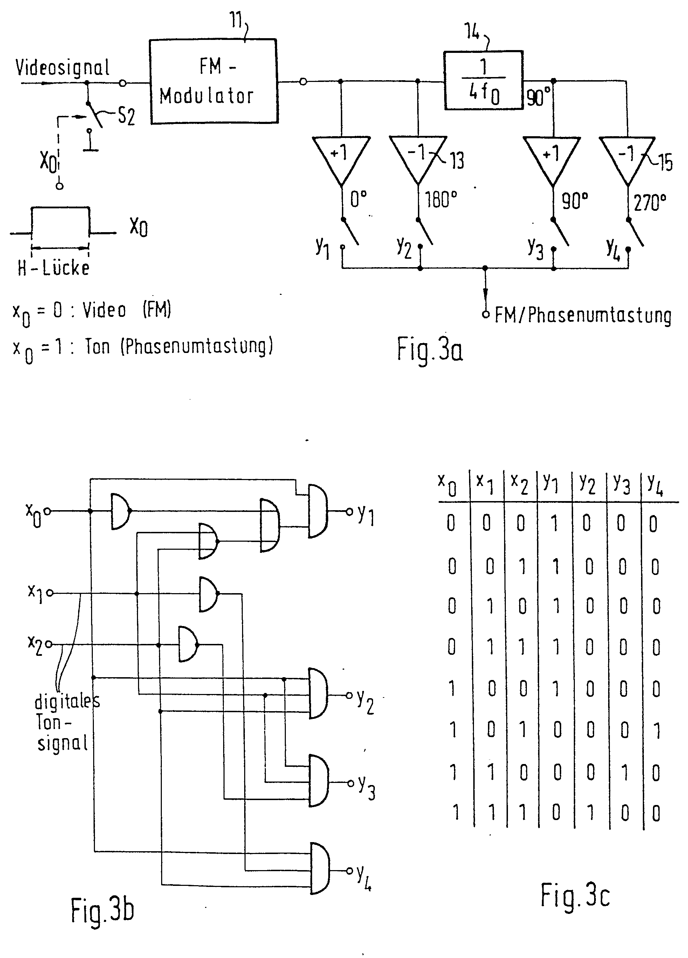

Die endlichen Übergangszeiten bei jedem Phasenwechsel bei dieser Anordnung lassen sich vermeiden, wenn, wie in Fig. 3a bis 3c gezeigt, die Trägerschwingung in verschiedenen (z. B. 4) Phasenlagen parallel zur Verfügung gestellt wird.

Aus der DE-OS-3 040 958 ist es bekannt, eine 4-Phasen-Umtastung dadurch zu erzeugen, daß eine Trägerschwingung in vier verschiedenen Phasenlagen parallel zur Verfügung gestellt wird und durch eine Phasenauswahlschaltung abhängig von den jeweils zu übertragenden Bits eine der vier Phasenlagen zum Ausgang durchgeschaltet wird. Die Ausgangsschwingung zur Erzeugung der Trägerschwingung ist dort jedoch eine Schwingung mit einer vierfachen Frequenz, von der durch Teilung die Trägerschwingung mit den gewünschten Phasenlagen abgeleitet wird. Im Gegensatz dazu wird bei der vorliegenden Erfindung von der Trägerschwingung der gewünschten Frequenz ausgegangen, und die verschiedenen Phasenlagen werden mit Hilfe eines Laufzeitgliedes erzeugt.

Da der Frequenzmodulator 11 während der Horizontalaustastlücke des Videosignals zur Verfügung steht, kann er als Trägeroszillator zur Erzeugung der verschiedenen Phasenlagen verwendet werden.

Eine Grundschaltung hierfür wird nun anhand der Figur 3a erläutert. Am Eingang des Frequenzmodulators 11 erscheint das Videosignal, das im Frequenzmodulator dem Bildträger durch Frequenzmodulation aufgeprägt wird. Dieser Eingang läßt sich mittels eines Schalters S2, der von einem Horizontalaustastlücken-Impuls $X_O$ gesteuert wird, mit Masse verbinden. Solange der Schalter S2 wie gezeigt geöffnet ist ($X_O = 0$) wird der Frequenzmodulator 11 als Frequenzmodulator für das Videosignal verwendet. Während der Horizontalaustastlücke ($X_O = 1$) ist der Eingang des Frequenzmodulators mit Masse verbunden, so daß er am Ausgang die unmodulierte Bildträgerschwingung mit einer Frequenz $f_o$ liefert. Eine Phasendrehung dieser Schwingung um 180° wird durch einen invertierenden Verstärker 13, eine Phasenverschiebung um 90° durch ein Laufzeitglied 14 mit der Verzögerungszeit $\frac{1}{4f_o}$ und eine Phasenverschiebung von 270° durch dieses Laufzeitglied und einen nachgeschalteten invertierenden Verstärker 15 erzeugt. Mit Hilfe einer logischen Schaltung nach Fig. 3b, deren Wahrheitstabelle in Fig. 3c gezeigt ist, werden entsprechend den Bits $X_1$ und $X_2$ eines jeweils zu übertragenden Dibits Phasenauswahlschalter $Y_1$ bis $Y_4$ gesteuert,

die eine der vier Phasen zum Ausgang durchschalten. Als Phasenauswahlschalter eignen sich beispielsweise PIN-Dioden und zum Abtrennen des Videosignals am Eingang des Frequenzmodulators 11 CMOS-Analogschalter.

Die Schaltung läßt sich auch mit Rechtecksignalen betreiben. Für die Phasenauswahl ist dann ein handelsüblicher Multiplexer-Baustein verwendbar. Das Ausgangssignal ist noch zu filtern, um eine Sinusform zu erreichen.

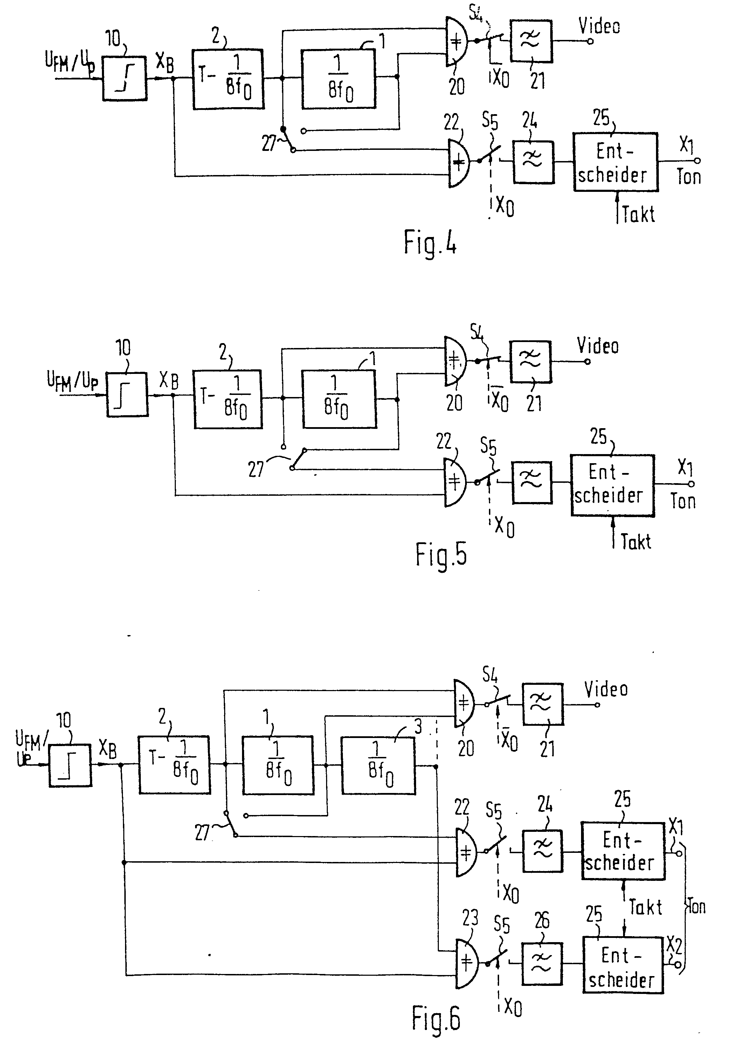

Anhand der Fig. 4 bis 6 werden nachstehend verschiedene Demodulatoren für das bekannte Fernsehübertragungssystem mit integrierter Begleittonübertragung erläutert. Sämtlichen gezeigten Demodulatoren ist das Prinzip gemeinsam, daß, wie bekannt, das durch Frequenzmodulation übertragene Videosignal und die mit Phasenumtastung übertragenen Zusatzinformationen durch differentielle Demodulation wiedergewonnen werden. (Die differentielle Demodulation hat gegenüber einer phasenkohärenten Demodulation den Vorteil, daß keine Trägerrückgewinnung erforderlich ist.)

Da es sich gezeigt hat, daß es ohne Störabstandsverlust möglich ist, statt mit Sinussignalen mit begrenzten Signalen, d. h. Rechtecksignalen, zu arbeiten, gelangt die modulierte Trägerschwingung, die mit $U_{FM}/U_P$ bezeichnet ist, am Eingang des Demodulators jeweils auf einen Begrenzer. Infolge der Amplitudenbegrenzung vereinfacht sich die Schaltung erheblich, da die ansonsten notwendigen analogen Multiplizierer als EXCLUSIV-ODER-Schaltungen realisierbar sind. Die Laufzeitglieder, die zur Erzeugung der für die differentielle Demodulation notwendigen Laufzeitunterschiede erforderlich sind, können entweder als von einem lokalen Oszillator getaktetes Schieberegister oder als Laufzeitleitungen realisiert werden.

Die Wiedergewinnung des Videosignals durch differentielle Demodulation geschieht bei allen gezeigten Demodulatoren dadurch, daß das frequenzmodulierte Empfangssignal $U_{FM}$ mit dem um eine bestimmte Laufzeit verzögerten Empfangssignal in einer EXCLUSIV-ODER-Schaltung 20 verknüpft wird und deren Ausgangssignal ein Tiefpaßfilter 21 durchläuft. Die digitalen Tonsignale werden dadurch aus dem phasenumgetasteten Empfangssignal $U_P$ wiedergewonnen, daß dieses (nach Bandbegrenzung) mit dem um eine bestimmte Laufzeit verzögerten gleichen Signal in einer EXCLUSIV-ODER-Schaltung 22 verknüpft wird und deren Ausgangssignal einen Tiefpaß 24 und einen nachgeschalteten Entscheider 25 durchläuft. Der Entscheider 25 wird bei 2-Phasen-Umtastung mit dem Bittakt und bei 4-Phasen-Umtastung mit dem Dibit-Takt versorgt. Die Erfindung betrifft nun die Erzeugung der Laufzeitdifferenzen, die für die unterschiedlichen Modulationsformen einerseits und für unterschiedliche Demodulatoranforderungen andererseits unterschiedlich sind. Der Demodulator nach Figur 4 ist hinsichtlich der digitalen Tonsignale für ein Empfangssignal mit 2-Phasen-Umtastung geeignet. Für die Wiedergewinnung des Videosignals durch differentielle Demodulation wird mit einem ersten Laufzeitglied ein Laufzeitunterschied von $\frac{1}{8f_0}$ erzeugt, wogegen zur Wiedergewinnung der digitalen Tonsignale mittels eines zweiten Laufzeitgliedes 2 ein Laufzeitunterschied von $T - \frac{1}{8f_0}$ erzeugt wird ($\frac{1}{8f_0} \triangleq \frac{\pi}{4}$ Phasenverschiebung). Dabei ist $f_0$ gleich der Frequenz des Bitträgers, T gleich $\frac{n}{f_0}$ und n so gewählt, daß T etwa gleich der Dauer eines Bits der digitalen Tonsignale ist.

Die beiden Laufzeitglieder 1 und 2 bilden eine Reihenschaltung, wobei die Reihenfolge gleichgültig ist, da die absoluten Laufzeiten für die Demodulation unerheblich sind. Der Eingang und Ausgang des ersten Laufzeitgliedes 1 sind also mit den Eingängen der EXCLUSIV-ODER-Schaltung 20 verbunden, wogegen der Eingang und Ausgang des zweiten Laufzeitgliedes 2 mit den Eingängen der EXCLUSIV-ODER-Schaltung 22 verbunden sind. Obwohl das phasenumgetastete Empfangssignal $U_P$ nur ein 2-Phasen-Umtastsignal ist, ist die Laufzeit des für die Wiedergewinnung der Tonsignale vorgesehenen Laufzeitgliedes 2 so bemessen und die Entscheiderschwelle im Entscheider 25 so eingestellt, als ob das erste Bit $X_1$ von mit 4-Phasen-Umtastung übertragenen Dibits wiederzugewinnen wäre. Damit der in Figur 4 gezeigte Demodulator leicht in einen anderen Demodulatorchip abgewandelt werden kann, ist eine Lötbrücke 27 vorgesehen, mit Hilfe derer statt des Ausgangssignals des Laufzeitgliedes 2 das Ausgangssignal des Laufzeitgliedes 1 verwendet werden kann, so daß der für die Wiedergewinnung der Tonsignale erzeugte Laufzeitunterschied gleich der Summe der Laufzeiten beider Laufzeitglieder ist. An einer geeigneten Stelle im Demodulationsweg sind Schalter S4 und S5 vorgesehen, beispielsweise zwischen der jeweiligen EXCLUSIV-ODER-Schaltung und dem entsprechenden nachgeschalteten Tiefpaß, die ausschließlich während der Horizontalaustastlücken die wiedergewonnenen Tonsignale zum Tonausgang und ausschließlich während der übrigen Zeit das wiedergewonnene Videosignal zum Videoausgang durchschalten. Der Schalter S5 für die Tonsignale wird durch den genannten Horizontalaustastlük-ken-Impuls $X_0$ geöffnet, wogegen gleichzeitig der im Videosignalwg liegende Schalter S4 durch den invertierten Impuls $\overline{X}_0$ geschlossen wird und umgekehrt. Statt den Signalweg aufzutrennen, ist es, wie in Figur 3a gezeigt, auch möglich, den entsprechenden Signalausgang über diese Schalter mit Masse zu verbinden.

Der Demodulator nach Figur 5 unterscheidet sich von dem nach Figur 4 dadurch, daß der Laufzeitunterschied zur Wiedergewinnung der digitalen Tonsignale bei einem empfangenen 2-Phasen-Umtastsignal (infolge der geänderten Lötbrücke 27) gleich der Summe der Laufzeiten beider Laufzeitglieder 1 und 2, d. h. gleich der Bitdauer T ist. Die Entscheiderschwelle im Entscheider 25 ist dabei auf einen Wert eingestellt, der gleich der halben Maximalamplitude ist. Dieser Demodulator nach Figur 5 zur Demodulation eines 2-Phasenumgetasteten Empfangssignals hat einen um 3 dB höheren Signal-Geräusch-Abstand gegenüber dem in Figur 4 gezeigten Demodulator.

Die Figur 6 zeigt schließlich einen Demodulator, der zur Demodulation eines Empfangssignals $U_P$ mit 4-Phasen-Umtastung geeignet ist. Die Laufzeitglieder 1 und 2 und deren Beschaltung, sowie die Mittel zum Wiedergewinnen des Videosignals und des Bits $X_1$ stimmen exakt mit dem Demodulator nach Figur 4 überein, so daß sie nicht nochmals erläutert zu werden brauchen. Zur Wiedergewinnung des zweiten Bits $X_2$ der bei 4-Phasen-Umtastung übertragenen Dibits ist die aus den Laufzeitgliedern 1 und 2 bestehende Reihenschaltung um ein drittes Laufzeitglied 3 erweitert, das die gleiche Laufzeit $\frac{1}{8f_0}$ wie das erste Laufzeitglied 1 hat. Zur Wiedergewinnung des zweiten Bits $X_2$ wird das Ausgangssignal der aus den drei Laufzeitgliedern bestehenden Laufzeitkette in einer weiteren EXCLUSIV-ODER-Schaltung 23 mit dem unverzögerten Empfangssignal, das am Eingang der Laufzeitkette abgegriffen wird, verknüpft und durchläuft darauf einen Tiefpaß 26 und einen Entscheider 25 entsprechend dem bereits beschriebenen Ausgangssignal der EXCLUSIV-ODER-Schaltung 22. Der Laufzeitunterschied zu Wiedergewinnung des zweiten Bits $X_2$ eines Dibits beträgt also $T + \frac{1}{8f_0}$ ($+ \frac{1}{8f_0} \triangleq + \frac{\pi}{4}$ Phasenverschiebung). Auch im Demodulationsweg des zweiten Bits $X_2$ eines Dibits befindet sich der gleiche Schalter S5 wie im Demodulationsweg für das erste Bit $X_1$ des Dibits, der dafür sorgt, daß ausschließlich während der Horizontalaustastlücken Ton-Ausgangssignale auftreten. Das in den beiden EXCLUSIV-ODER-Schaltungen 22 und 23 verwendete unverzögerte Ausgangssignal des Begrenzers 10 ist mit $X_B$ bezeichnet. Die Lötbrücke 27 ist auch beim Demodulator nach Fig. 6 vorhanden, so daß dieser auch in der Funktion des Demodulators nach Fig. 5 oder Fig. 4 verwendet werden kann, wobei dann der Demodulatorteil für $X_2$ nicht verwendet wird.

Für die Frequenzdemodulation könnte ein Laufzeitunterschied von $\frac{1}{4f_0}$ günstiger sein, als ein Laufzeitunterscheid von $\frac{1}{8f_0}$, da damit der Arbeitspunkt bei unmoduliertem Träger in die Mitte des nutzbaren Kennlinienbereichs gelegt ist. In diesem Falle wäre der untere Eingang der EXCLUSIV-ODER-Schaltung 20 mit dem Ausgang des dritten Laufzeitgliedes 3 zu verbinden, wie gestrichelt angedeutet, anstatt mit dem Ausgang des ersten Laufzeitgliedes 1.

In diesem Falle können die beiden Laufzeitglieder 1 und 3 auch zu einem einzigen Laufzeitglied mit der Laufzeit $\frac{1}{4f_0}$ vereinigt werden.

Aus der DE-AS-2 648 977 ist ein Demodulator für ein Eingangssignal mit 4-Phasen-Umtastung bekannt, der einen Begrenzer, Laufzeitglieder, EXCLUSIV-ODER-Schaltungen, Zähler zum Integrieren und Entscheider aufweist. Es ist aber dort nicht vorgesehen, Teile davon auch zur Frequenzmodulation zu verwenden.

Erwähnt sei noch, daß die Frequenz $f_0$, bei der demoduliert wird, nicht unbedingt gleich der erwähnten Frequenz von 70 MHz sein muß. Hinsichtlich einer eventuellen möglichen Verwendung des Demodulators zur Wiedergewinnung des Videosignals und der Tonsignale in Fernseh-Heimempfängern hat dies den Vorteil, daß die Zwischenfrequenz so wählbar ist, daß die Realisierung des Demodulators möglichst günstig ist. Denkbar wäre eine Frequenz im Bereich um 20 MHz, die eine TTL-Realisierung der Laufzeitglieder und der EXCLUSIV-ODER-Schaltungen zulassen würde.

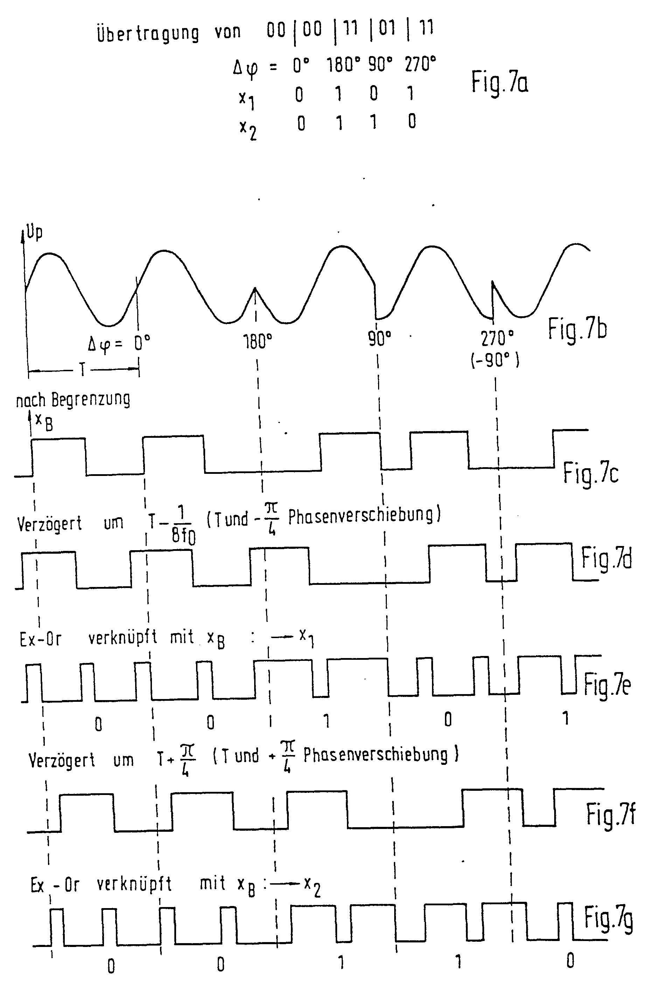

Anhand der Fig. 7a bis 7g wird nun die Wirkungsweise des Demodulators nach Fig. 6 auf ein Empfangssignal $U_P$ mit 4-Phasen-Umtastung erläutert. Die Fig. 7a gibt die der 4-Phasen-Umtastung zugrundeliegende Codierungsvorschrift am Beispiel einer Dibit-Folge an, wobei die beiden Bits jedes Dibits mit $X_1$ und $X_2$ bezeichnet sind. Fig. 7b zeigt den entsprechenden Verlauf des Empfangssignals $U_P$, das eine 4-Phasen-Umtastung aufweist. Der Begrenzer 10 nach den Fig. 4 bis 6 formt das Empfangssignal $U_P$ in ein Rechtecksignal um, das in Fig. 7c gezeigt und mit $X_B$ bezeichnet ist. Durch Verzögerung um T und Phasenverschiebung um $-\dfrac{\pi}{4}$ (Fig. 7d) und durch EXCLUSIV-ODER-Verknüpfung mit $X_B$ ergibt sich das in Fig. 7e gezeigte Signal, von dem durch Tiefpaßfilterung und Entscheidung die ersten Bits $X_1$ der Dibits abgeleitet werden können. Durch Verzögerung des Signals $X_B$ um T und Phasenverschiebung um $+\dfrac{\pi}{4}$ (Fig. 7f) und durch EXCLUSIV-ODER-Verknüpfung mit $X_B$ ergibt sich das in Fig. 7g gezeigte Signal, von dem ebenfalls durch Tiefpaßfilterung und Entscheidung die jeweils zweiten Bits $X_2$ der Dibits abgeleitet werden können.

**Patentansprüche**

1. Fernsehübertragungssystem, bei dem das Videosignal durch Frequenzmodulation des Bildträgers übertragen wird und bei dem während der Horizontalaustastlücken des Videosignals Zusatzinformationen, insbesondere Tonsignale, durch Phasenumtastung desselben Bildträgers übertragen werden, dadurch gekennzeichnet, daß im Sender der zur Übertragung des Videosignals verwendete Frequenzmodulator (11) während der Horizontalaustastlücken des Videosignals zur Übertragung der Zusatzinformationen durch Phasenumtastung verwendet wird (Figur 1, Figur 3).

2. Fernsehübertragungssystem nach Anspruch 1, dadurch gekennzeichnet, daß der Frequenzmodulator (11) während der Horizontalaustastlücken des Videosignals mit einem Signal ($\varphi'$) angesteuert wird, das proportional der zeitlichen Ableitung des zeitlichen Verlaufs des Phasenwinkels ($\varphi$) ist, der entsprechend den zu übertragenden Bits durch die Codierungsregeln der Phasenumtastung bestimmt ist (Figur 1, Figur 2).

3. Fernsehübertragungssystem nach Anspruch 1, dadurch gekennzeichnet, daß die Phasenumtastung mittels einer durch die zu übertragenden Zusatzinformationen gesteuerten Phasenauswahlschaltung (Figur 3a, Figur 3b) durchgeführt wird, deren Eingangssignal das während der Horizontalaustastlücke unmodulierte Ausgangssignal des Frequenzmodulators (11) ist (Figur 3).

4. Fernsehübertragungssystem, bei dem das Videosignal durch Frequenzmodulation des Bildträgers übertragen wird und bei dem während der Horizontalaustastlücken des Videosignals Zusatzinformationen, insbesondere Tonsignale, durch Phasenumtastung desselben Bildträgers übertragen werden, wobei im empfangsseitigen Demodulator das Videosignal und die Zusatzinformationen durch differentielle Demodulation gewonnen werden, dadurch gekennzeichnet, daß zum Erzeugen der für die differentielle Demodulation notwendigen Laufzeitunterschiede eine Reihenschaltung zweier Laufzeitglieder (1, 2) vorhanden ist, wobei die Laufzeit des ersten Laufzeitgliedes (1) für die Gewinnung des Videosignals und die Laufzeit des zweiten Laufzeitgliedes (2) für die Gewinnung des jeweils ersten Bits ($X_1$) von mit 4-Phasen-Umtastung übertragenen Dibits bemessen ist (Fig. 4, Fig. 5, Fig. 6).

5. Fernsehübertragungssystem nach Anspruch 4, wobei die Zusatzinformationen mit 2-Phasen-Umtastung übertragen werden, dadurch gekennzeichnet, daß der für die Gewinnung des Videosignals notwendige Laufzeitunterschied durch das erste Laufzeitglied (1) und der für die Gewinnung der Zusatzinformationen notwendige Laufzeitunterschied durch das zweite Laufzeitglied (2) erzeugt wird und daß im Demodulator für die Zusatzinformationen ein Entscheider (25) vorhanden ist, dessen Entscheiderschwelle so eingestellt ist, als ob ein Bit eines mit 4-Phasen-Umtastung übertragenen Dibits zu gewinnen wäre (Fig. 4).

6. Fernsehübertragungssystem nach Anspruch 4, wobei die Zusatzinformationen mit 2-Phasen-Umtastung übertragen werden, dadurch gekennzeichnet, daß der für die Gewinnung des Videosignals notwendige Laufzeitunterschied durch das erste Laufzeitglied (1) und der für die Gewinnung der Zusatzinformationen notwendige Laufzeitunterschied durch die Reihenschaltung des ersten (1) und des zweiten Laufzeitgliedes (2) erzeugt wird und daß im Demodulator für die Zusatzinformationen ein Entscheider (25) vorhanden ist, dessen Entscheiderschwelle etwa gleich der halben Maximalamplitude ist (Figur 5).

7. Fernsehübertragungssystem nach Anspruch 4, wobei die Zusatzinformationen mit 4-Phasen-Umtastung übertragen werden, dadurch gekennzeichnet, daß die Reihenschaltung (1, 2) ein drittes Laufzeitglied (3) enthält, daß der für die Gewinnung des Videosignals notwendige Laufzeitunterschied durch das erste Laufzeitglied (1) oder durch die aus dem ersten (1) und dritten Laufzeitglied (3) bestehende Reihenschaltung erzeugt wird, daß der für die Gewinnung des jeweils ersten Bits ($X_1$) der mit 4-Phasen-Umtastung übertragenen Dibits notwendige Laufzeitunterschied durch das zweite Laufzeitglied (2) erzeugt wird und daß der für die Gewinnung des jeweils zweiten Bits ($X_2$) der mit 4-Phasen-Umtastung übertragenen Dibits notwendige Laufzeitunterschied durch die aus den drei Laufzeitgliedern (1, 2, 3) bestehende Reihenschaltung (1, 2, 3) erzeugt wird (Figur 6).

8. Fernsehübertragungssystem nach einem der Ansprüche 4 bis 7, dadurch gekennzeichnet, daß die Laufzeit des ersten und dritten Laufzeitgliedes (1, 3) gleich $\frac{1}{8f_0}$ und die des zweiten Laufzeitgliedes (2) $T - \frac{1}{8f_0}$ ist, wobei $f_0$ gleich der Frequenz des Bildträgers, T gleich $\frac{n}{f_0}$ und n so gewählt ist, daß T etwa gleich einer Bitperiode ist.

**Claims**

1. Television transmission system in which the video signal is transmitted by frequency modulation of the picture carrier and in which, during the horizontal line-blanking intervals of the video signal, additional information, in particular sound signals, is transmitted by phase shift keying of the same picture carrier, characterized in that in the transmitter the frequency modulator (11) used for transmitting the video signal is used during the horizontal line-blanking intervals of the video signal for transmitting the additional information by phase shift keying (Fig. 1, Fig. 3).

2. A television transmission system as claimed in Claim 1, characterized in that during the horizontal line-blanking intervals of the video signal, the frequency modulator (11) is controlled by a signal ($\varphi'$) which is proportional to the time derivative of the shape of curve of the phase angle ($\varphi$) as a function of time and which, in accordance with the bits to be transmitted, is determined by the coding rules of the phase shift keying (Fig. 1, Fig. 2).

3. A television transmission system as claimed in Claim 1, characterized in that the phase shift keying is carried out with the aid of a phase select circuit (Fig. 3a, Fig. 3b) controlled by the additional information to be transmitted, the input signal thereof being the output signal of the frequency modulator (11), which is unmodulated during the horizontal line-blanking interval (Fig. 3).

4. A television transmission system in which the video signal is transmitted by frequency modulation of the picture carrier and in which, during the horizontal line-blanking intervals of the video signal, additional information, in particular sound signals, is transmitted by phase shift keying of the same picture carrier, the video signal being obtained in the demodulator at the receiving end, and the additional information being obtained by differential demodulation, characterized in that for producing the delay time differences necessary for the differential demodulation there is provided a series arrangement of two delay units (1, 2), the delay time of the first delay unit (1) being dimensioned for obtaining the video signal and the delay time of the second delay unit (2) being dimensioned for obtaining the respective first bit ($X_1$) of dibits transmitted by 4-phase shift keying (Fig. 4, Fig. 5, Fig. 6).

5. A television transmission system as claimed in Claim 4, in which the additional information is transmitted by 2-phase shift keying, characterized in that the delay time difference necessary for obtaining the video signal is produced by the first delay unit (1) and that the delay time difference necessary for obtaining the additional information is produced by the second delay unit (2), and that in the demodulator for the additional information there is provided a decision element (25) whose decision threshold is so adjusted as if one bit of a dibit transmitted by 4-phase shift keying were to be obtained (Fig. 4).

6. A television transmission system as claimed in Claim 4, in which the additional information is transmitted by 2-phase shift keying, characterized in that the delay time difference necessary for obtaining the video signal is produced by the first delay unit (1) and that the delay time difference necessary for obtaining the additional information is produced by the series arrangement of the first (1) and of the second delay unit (2) and that in the demodulator for the additional information there is provided a decision element (25) whose decision threshold is approximately equal to half the maximum amplitude (Fig. 5).

7. A television transmission system as claimed in Claim 4, in which the additional information is transmitted by 4-phase shift keying, characterized in that said series arrangement (1, 2) contains a third delay unit (3), that the delay time difference necessary for obtaining the video signal is produced by the first delay unit (1) or by the series arrangement consisting of said first (1) and said third delay unit (3), that the delay time difference necessary for obtaining the respective first bit ($X_1$) of the dibits transmitted by 4-phase shift keying is produced by the second delay unit (2) and that the delay time difference necessary for obtaining the respective second bit ($X_2$) of the dibits transmitted by 4-phase shift keying is produced by the series arrangement (1, 2, 3) consisting of the three delay units (1, 2, 3) (Fig. 6).

8. A television transmission system as claimed in any one of Claims 4 to 7, characterized in that the delay time of both the first and the third delay units (1, 3) is equal to $\frac{1}{8f_0}$ and that of the second delay unit (2) is $T - \frac{1}{8f_0}$, and $f_0$ being equal to the frequency of the picture carrier, T being equal to $\frac{n}{f_0}$ and n being so chosen that T is approximately equal to one bit period.

## Revendications

1. Système de transmission de télévision dans lequel le signal vidéo est transmis par modulation de fréquence de la porteuse image et dans lequel, durant l'intervalle de suppression ligne du signal vidéo, des informations additionnelles, en particulier des signaux son, sont transmises par manipulation de phase de ladite porteuse image, caractérisé en ce que, dans l'émetteur, le modulateur de fréquence (11) servant à la transmission du signal vidéo est utilisé durant les intervalles de suppression ligne du signal vidéo, pour la transmission desdites informations additionnelles par manipulation de phase (fig. 1, fig. 3).

2. Système de transmission de télévision conforme à la revendication 1, caractérisé en ce que le modulateur de fréquence (11), durant l'intervalle de suppression ligne du signal vidéo, est commandé par un signal ($\varphi'$) qui est proportionnel à la dérivée par rapport au temps de la forme de la courbe de l'angle de phase ($\varphi$) en fonction du temps qui est déterminée, selon les bits à transmettre, par les règles de codage de la manipulation de phase (fig. 1, fig. 2).

3. Système de transmission de télévision conforme à la revendication 1, caractérisé en ce que la manipulation de phase est effectuée à l'aide d'un circuit de sélection de phase (fig. 3a, fig. 3b) commandé par ladite information additionnelle à transmettre et dont le signal d'entrée est le signal de sortie du modulateur de fréquence (11) non modulé durant les intervalles de suppression ligne (fig. 3).

4. Système de transmission de télévision dans lequel le signal vidéo est transmis par modulation de fréquence d'une porteuse image, dans lequel, durant l'intervalle de suppression ligne du signal vidéo, des informations additionnelles, en particulier des signaux son, sont transmises par manipulation de phase de ladite porteuse image, et dans lequel, dans démodulateur, à l'extrémité de réception, le signal vidéo et lesdites informations additionnelles sont obtenues par démodulation différentielle, caractérisé en ce que, pour produire les différences de retard nécessaires à la démodulation différentielle, il est prévu un arrangement en série de deux éléments à retard (1, 2), le retard du premier élément à retard (1) étant dimensionné pour l'obtention du signal vidéo, tandis que le retard du deuxième élément à retard (2) est dimensionné pour l'obtention du premier bit respectif ($X_1$) de paires de bits transmis par une manipulation de phase à quatre phases (fig. 4, fig. 5, fig. 6).

5. Système de transmission de télévision conforme à la revendication 4, dans lequel les informations additionnelles sont transmises par une manipulation de phase à deux phases, caractérisé en ce que la différence de retard nécessaire pour l'obtention du signal vidéo est produit par le premier élément à retard (1), en ce que la différence de retard nécessaire pour l'obtention des informations additionnelles est produite par un deuxième élément à retard (2) et en ce que, dans le démodulateur des informations additionnelles, il est prévu un élément de décision (25) dont le seuil de décision est ajusté comme si l'on devait obtenir un bit d'une paire de bits transmise par modulation à quatre phases (fig. 4).

6. Système de transmission de télévision conforme à la revendication 4, dans lequel les informations additionnelles sont transmises par une manipulation de phase à deux phases, caractérisé en ce que la différence de retard nécessaire pour l'obtention du signal vidéo est produit par le premier élément à retard (1), en ce que la différence de retard nécessaire pour l'obtention des informations additionnelles est produite par l'arrangement en série du premier (1) et d'un deuxième élément à retard (2) et en ce que pour le démodulateur des informations additionnelles, il est prévu un élément de décision (25) dont le seuil de décision est égale à presque la moitié de l'amplitude maximale (fig. 5).

7. Système de transmission de télévision conforme à la revendication 4, dans lequel les informations additionnelles sont transmises par une manipulation de phase à quatre phases, caractérisé en ce que ledit arrangement en série (1, 2) comprend un troisième élément de retard (3), en ce que la différence de retard nécessaire pour l'obtention du signal vidéo est produit par le premier élément à retard (1), ou par la combinaison en série dudit premier (1) et dudit troisième (3) élément à retard, en ce que la différence de retard nécessaire pour l'obtention du premier bit respectif ($X_1$) des paires de bits transmis par modulation de phase à quatre phases est produite par dedit deuxième élément à retard (2) et en ce que la différence de retard nécessaire pour l'obtention du deuxième bit respectif ($X_2$) des paires de bits transmises par modulation à quatre phases est produite par l'arrangement en série (1, 2, 3) comprenant les trois éléments à retard (1, 2, 3) (fig. 6).

8. Système de transmission de télévison conforme à l'une quelconque des revendications 4 à 7, caractérisé en ce que le retard dudit premier et dudit troisième élément à retard (1, 3) est égal à $\frac{1}{8f_0}$ et en ce que le retard dudit deuxième élément à retard (2) est $T - \frac{1}{8f_0}$, $f_0$ étant la fréquence de la porteuse image, T étant égal à $\frac{n}{f_0}$ et n étant choisi de manière que T soit presque égal à une période de bit.

Videosignal

Impuls-generator 12

S1

x₀

FM-Modulator

U_FM /U_P

11

Fig.1

dig. Ton-signale

U_p/U_0

1

Fig.2a

0° (00)    180° (11)    90° (10)    270° (01)    0° (360°)

$\frac{\varphi(t)}{\frac{\pi}{2}}$

3

2

1

0

Fig.2b

$\frac{\varphi'(t)}{\frac{\pi}{2}}$

2

1

0

-1

Fig.2c

EP 0 113 436 B1

Fig.3a

Fig.3b

| $x_0$ | $x_1$ | $x_2$ | $y_1$ | $y_2$ | $y_3$ | $y_4$ |
|-------|-------|-------|-------|-------|-------|-------|
| 0 | 0 | 0 | 1 | 0 | 0 | 0 |
| 0 | 0 | 1 | 1 | 0 | 0 | 0 |
| 0 | 1 | 0 | 1 | 0 | 0 | 0 |
| 0 | 1 | 1 | 1 | 0 | 0 | 0 |
| 1 | 0 | 0 | 1 | 0 | 0 | 0 |
| 1 | 0 | 1 | 0 | 0 | 0 | 1 |
| 1 | 1 | 0 | 0 | 0 | 1 | 0 |
| 1 | 1 | 1 | 0 | 1 | 0 | 0 |

Fig.3c

Fig.4

Fig.5

Fig.6

13

Übertragung von    00 | 00 | 11 | 01 | 11

$\Delta \varphi = 0°\quad 180°\quad 90°\quad 270°$

$x_1 \qquad 0 \qquad 1 \qquad 0 \qquad 1$

$x_2 \qquad 0 \qquad 1 \qquad 1 \qquad 0$

Fig. 7a

Fig. 7b

nach Begrenzung

Fig. 7c

Verzögert um $T - \frac{1}{8f_0}$ ($T$ und $-\frac{\pi}{4}$ Phasenverschiebung)

Fig. 7d

Ex-Or verknüpft mit $x_B$ : — $x_1$

Fig. 7e

Verzögert um $T + \frac{\pi}{4}$ ($T$ und $+\frac{\pi}{4}$ Phasenverschiebung)

Fig. 7f

Ex - Or verknüpft mit $x_B$ : — $x_2$

Fig. 7g